(19) Europäisches Patentamt
European Patent Office
Office européen des brevets

(11) EP 0 698 301 B1

(12) # EUROPÄISCHE PATENTSCHRIFT

(45) Veröffentlichungstag und Bekanntmachung des Hinweises auf die Patenterteilung:
**08.01.1997 Patentblatt 1997/02**

(21) Anmeldenummer: **94916172.3**

(22) Anmeldetag: **29.04.1994**

(51) Int Cl.[6]: **H01M 10/40**, C07F 5/04

(86) Internationale Anmeldenummer:
**PCT/EP94/01366**

(87) Internationale Veröffentlichungsnummer:
**WO 94/27335 (24.11.1994 Gazette 1994/26)**

(54) **ELEKTROLYT ZUR ANWENDUNG IN EINER GALVANISCHEN ZELLE**
ELECTROLYTE FOR USE IN A GALVANIC CELL
ELECTROLYTE POUR PILE GALVANIQUE

(84) Benannte Vertragsstaaten:
**DE FR GB**

(30) Priorität: **13.05.1993 DE 4316104**

(43) Veröffentlichungstag der Anmeldung:
**28.02.1996 Patentblatt 1996/09**

(73) Patentinhaber: **WÜHR, Manfred**
**93053 Regensburg (DE)**

(72) Erfinder: **WÜHR, Manfred**
**93053 Regensburg (DE)**

(74) Vertreter: **Bühling, Gerhard, Dipl.-Chem. et al**
**Patentanwaltsbüro**
**Tiedtke-Bühling-Kinne & Partner**
**Bavariaring 4**
**80336 München (DE)**

(56) Entgegenhaltungen:
**EP-A- 0 122 381** **EP-A- 0 538 615**
**GB-A- 2 143 228** **US-A- 4 808 282**

- **PATENT ABSTRACTS OF JAPAN vol. 16, no. 236 (E-1210) 29. Mai 1992 & JP,A,04 048 709 (JAPAN CARLIT CO LTD) 18. Februar 1992**
- **PATENT ABSTRACTS OF JAPAN vol. 13, no. 421 (E-822) 19. September 1989 & JP,A,01 157 514 (NICHICON CORP) 19. September 1989**
- **PATENT ABSTRACTS OF JAPAN vol. 5, no. 40 (E-049) 17. März 1981 & JP,A,55 165 580 (MATSUSHITA ELECTRIC IND CO) 24. Dezember 1980**
- **PATENT ABSTRACTS OF JAPAN vol. 7, no. 162 (E-187) (1307) 15. Juli 1983 & JP,A,58 068 878 (HITACHI MAXELL K.K.) 23. April 1983**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 698 301 B1

## Beschreibung

Die vorliegende Erfindung betrifft neue Elektrolyte zur Anwendung in galvanischen Zellen, insbesondere in Lithiumzellen. Eine Lithiumzelle wird in dieser Schrift wie folgt definiert:

Eine Lithiumzelle besteht im wesentlichen aus einer Anode, einer Kathode und einem Elektrolyten. Die Anode besteht aus Lithium, einer Lithiumlegierung oder einer Substanz, die Lithiumionen intercalieren kann, wie z.B. Kohlenstoff. Die Kathode besteht im allgemeinen aus einer Substanz, die Lithiumionen intercalieren kann oder mit Lithiumionen eine elektrochemische Reaktion eingeht, wobei das Potential der Kathode deutlich höher liegt als das der Anode. Der Elektrolyt besteht aus einem oder mehreren Salzen, die in einem geeigneten Lösungsmittel, einer Mischung von Lösungsmitteln, einem Polymer oder einer Mischung aus einem Polymer und einem oder mehreren Lösungsmitteln gelöst ist. Man unterscheidet primäre und sekundäre Lithiumzellen.

Diese Definition schließt die sogenannten "rocking chair Batterien" ein. Neuere Entwicklungen auf diesem Gebiet sind in dem Artikel von B. Scrosati ( J. Electrochem. Soc. Vol.139, 2776, (1992)) dargestellt.

Gebräuchliche Lösungsmittel für Lithiumzellen sind:

Organische Carbonate wie Propylencarbonat (PC) oder Ethylencarbonat (EC). Lineare und zyklische Ether sowie Polyether wie Dimethoxyethan (DME), Diethoxyethan (DEE), Tetrahydrofuran (THF), 2-Methyltetrahydrofuran (2-Me-THF oder MT), Dioxolan sowie das Polymer Polyethylenoxid.

Gebräuchliche Salze sind:

Lithiumperchlorat ($LiClO_4$), Lithiumtetrafluoroborat ($LiBF_4$), Lithiumhexafluorophosphat ($LiPF_6$), Lithiumhexafluoroarsenat ($LiAsF_6$), Lithiumtrifluormethylsulfonat ($LiCF_3SO_3$) und Lithiumbis(trifluormethylsulfonyl)imid ( $Li(CF_3SO_2)_2N$ ). Die oben angegebenen Salze weisen einige gravierende Nachteile auf. Lithiumperchlorat neigt in Kombination mit einigen Lösungsmitteln wie Dioxolan zu Explosionen. Verbindungen mit fluorierten anorganischen Anionen wie Lithiumhexafluorophosphat sind thermisch wenig stabil und bilden durch Dissoziation Lewissäuren, die das Lösungsmittel polymerisieren können. Lithiumhexafluoroarsenat ist wegen des Arsenanteils umweltschädigend und bildet bei der Reaktion mit Lithium krebserregende Nebenprodukte. Lithiumbis(trifluormethylsulfonyl)imid ist vergleichsweise teuer.

Aufgabe der Erfindung ist es, einen Elektrolyten zur Anwendung in einer galvanischen Zelle zu schaffen, der explosionssicher, stabil und dabei umweltverträglich ist.

Dies wird dadurch erreicht, daß der Elektrolyt Borate der Zusammensetzung $ABL_2$ enthält, wobei A Lithium oder ein quartäres Ammoniumion bedeutet. Der zweizähnige Chelatligand L ist hierbei über zwei Sauerstoffatome an das zentrale Boratom gebunden. Chelatkomplexe dieses Typs sind im allgemeinen thermisch sehr stabil. Die Gefahr einer exothermen Reaktion mit dem Lösungsmittel oder mit Lithium ist gering, da Borate keine starken Oxidationsmittel sind. Die erfindungsgemäßen Elektrolyte sind daher explosionssicher. Weiterhin können die erfindungsgemäßen Salze keine das Lösungsmittel polymerisierenden Lewissäuren bilden. Die Elektrolyte sind deswegen langzeitstabil und über einen weiten Temperaturbereich hinweg einsetzbar. Die erfindungsgemäßen Salze enthalten keine Elemente, die bei der Verbrennung toxische Verbindungen bilden. Bei der Hydrolyse der Salze entstehen im allgemeinen harmlose bzw. mindergiftige Verbindungen (vgl. Beispiel 1, 2 und 4). Die erfindungsgemäßen Elektrolyte sind daher umweltverträglich.

Die Leitfähigkeit der Elektrolyte kann erhöht werden, indem man Elektrolyte des erfindungsgemäßen Typs herstellt, die neben dem Lithiumsalz auch noch ein quartäres Ammoniumsalz enthalten. Hierzu können Tetraalkylammoniumsalze mit vier Alkylresten (vgl. Beispiel 2 und 3) oder auch quartäre Ammoniumsalze mit Spiranstruktur wie z.B. Bispiperidiniumsalze verwendet werden. Die an das Stickstoffatom gebundenen Reste können außerdem Heteroatome enthalten wie z.B. im Falle des (2-Ethoxyethyl)trimethylammoniumions. Weiterhin kann die Leitfähigkeit erhöht werden, indem man Mischungen aus einem Lösungsmittel mit hoher Dielektrizitätskonstante und einem Lösungsmittel mit niedriger Viskosität verwendet. Einige Daten für solche Systeme sind in Beispiel 5 gezeigt.

Die elektrochemischen Eigenschaften einiger der erfindungsgemäßen Elektrolyte wurden nach den in dem Artikel von Barthel et al. (J. Electrochem. Soc., Vol.140, 6, (1993) ) gezeigten Methoden untersucht. Die Beispiele 6, 7, 9, 10 und 11 zeigen hierbei, daß Elektrolyte, die als Lösungsmittel ein organisches Carbonat wie PC enthalten, besonders gute Zyklisiereigenschaften aufweisen.

In den erfindungsgemäßen Salzen sind zwei zweizähnige Chelatliganden über Sauerstoffbrücken an das zentrale Boratom gebunden. Da Sauerstoff ein sehr elektronegatives Element ist, befindet sich stets eine negative Partialladung auf den Sauerstoffatomen. Es ist deshalb vorteilhaft, wenn der Ligand ein aromatisches System enthält, das durch Mesomerie die Elektronendichte bzw. Partialladung an den Sauerstoffatomen erniedrigt, weil dadurch die negative Ladung gleichmäßiger über das Anion verteilt wird. Hierdurch wird die Wechselwirkung zwischen Kation und Anion sowohl im Festkörper als auch in der Lösung vermindert. Dies führt zu einer relativ guten Leitfähigkeit und Löslichkeit der Verbindungen in aprotischen organischen Lösungsmitteln.

Der Ligand sollte hierbei nicht zu groß sein, weil sonst die Ionenbeweglichkeit des Anions klein ist, was zu einer zu niedrigen Leitfähigkeit führt. Deshalb sind Liganden mit einem aromatischen Sechsring besonders günstig.

Die Delokalisierung der negativen Ladung des Anions wird noch dadurch verstärkt, daß der Ligand elektronegative

Atome enthält, die durch ihren induktiven Effekt zu einer weiteren Verminderung der Ladung auf den Sauerstoffatomen führen. Dies kann insbesondere durch fluorsubstituierte Aromaten oder durch Heteroaromaten erreicht werden, die z. B. Stickstoffatome enthalten. Die rechte Spalte in Tabelle 1 zeigt für einige der eben beschriebenen Anionen die Partialladung Q auf den Sauerstoffatomen als Vielfache der Elementarladung e. Die Werte wurden durch eine semiempirische quantenmechanische Rechnung gewonnen. Man sieht, daß die Partialladung auf den Sauerstoffatomen durch die elektronegativen Atome Fluor und Stickstoff deutlich vermindert wird.

Die Einsetzbarkeit der beschriebenen Elektrolyte hängt neben der Leitfähigkeit, dem Zyklisierverhalten und der Stabilität gegenüber Lithium auch von der Kompatibilität gegenüber dem Kathodenmaterial ab. Bei Verwendung von stark oxidierenden Kathodenmaterialien kann es sinnvoll sein, Elektrolyte mit fluorsubstituierten oder heteroaromatischen Anionen zu einzusetzen, da die Verwendung von Chelatkomplexen mit elektronegativen Atomen zu einer Absenkung der Energie des höchsten besetzten Molekülorbitals (HOMO) und somit zu einer erhöhten Stabilität gegenüber Oxidation führt. Wenn man das anodische Potentialfenster eines Elektrolyten des erfindungsgemäßen Typs kennt (vgl. Beispiel 8), so kann man nach einer von Yilmaz und Yurtsever (J. Electroanal. Chem., Vol.261, 105-112, (1989) ) beschriebenen Methode das anodische Potentialfenster von strukturell ähnlichen Verbindungen abschätzen. Die HOMO-Energien einiger der beschriebenen Anionen sind in Tabelle 1 angegeben.

Einige der erfindungsgemäßen Salze sind durch einfache und preiswerte Verfahren, wie z.B. durch Kristallisation aus wäßriger Lösung (vgl. Beispiel 1 und 2) oder durch eine Fällungsreaktion (vgl. Beispiel 3) darstellbar. Die zur Herstellung von Lithiumbis[1,2-benzoldiolato(2-)-O,O']borat(1-), Lithiumbis [salicylato(2-)]borat(1-) und Tetraalkylammoniumbis [1,2-benzoldiolato(2-)-O,O']boraten(1-) verwendeten Chemikalien sind außerdem sehr preiswert, so daß die Herstellungskosten gering sind.

Die Formeln 1 bis 7 zeigen einige Strukturformeln von Verbindungen des erfindungsgemäßen Typs.

Strukturformel 1:

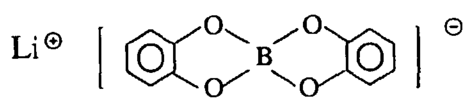

Summenformel: $LiB(C_6H_4O_2)_2$
systematischer Name: Lithiumbis[1,2-benzoldiolato(2-)-O,O']borat(1-) andere Bezeichnung: Lithiumdibrenzcatechinborat, Lithiumbiscatecholborat

Strukturformel 2:

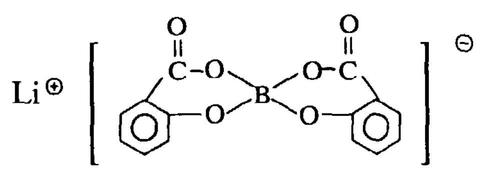

Summenformel: $LiB(C_7H_4O_3)_2$
systematischer Name: Lithiumbis [salicylato(2-)]borat(1-) andere Bezeichnung: Lithiumdisalicylborat

Strukturformel 3:

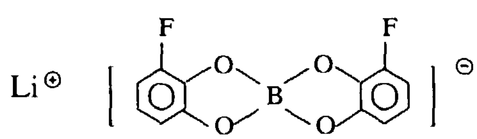

Summenformel: $LiB(C_6H_3O_2F)_2$
systematischer Name: Lithiumbis[3-fluor-1,2-benzoldiolato(2-)-O,O']borat(1-)

Strukturformel 4:

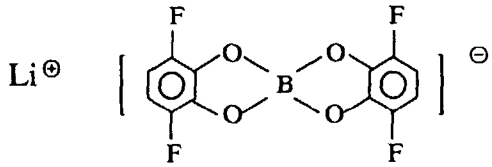

Summenformel: $LiB(C_6H_2O_2F_2)_2$
sytematischer Name: Lithiumbis[3,6-difluor-1,2-benzoldiolato(2-)-O,O']borat(1-)

Strukturformel 5:

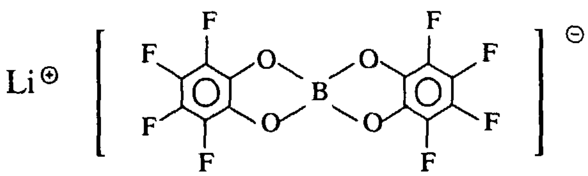

Summenformel: $LiB(C_6O_2F_4)_2$
systematischer Name:
Lithiumbis[3,4,5,6-tetrafluor-1,2-benzoldiolato(2-)-O,O']borat(1-)

Strukturformel 6:

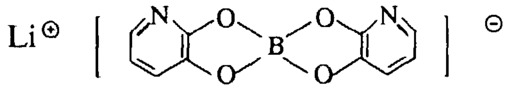

Summenformel: $LiB(C_5H_3NO_2)_2$
systematischer Name: Lithiumbis[2,3-pyridindiolato(2-)-O,O']borat(1-)

Strukturformel 7:

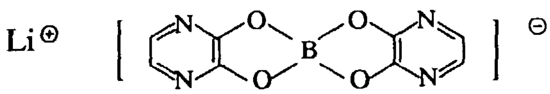

Summenformel: $LiB(C_4H_2N_2O_2)_2$
systematischer Name: Lithiumbis[2,3-pyrazindiolato(2-)-O,O']borat(1-)

Ein weiterer Gegenstand der Erfindung besteht in einer galvanischen Zelle mit einer Anode, einer Kathode und dem vorstehend beschriebenen erfindungsgemäßen Elektrolyten. Als Anode kann hierbei Lithium, eine Lithiumlegierung oder auch eine $Li^+$-intercalierende Kohlenstoffelektrode dienen (vgl. Beispiel 10 und 11). Als Kathode kann eine $Li^+$-intercalierende Elektrode wie z.B. $TiS_2$, $MoS_2$ oder Vanadiumoxid verwendet werden, wobei das Ruhepotential der Kathode kleiner sein sollte, als das anodische Potentiallimit des Elektrolyten. Falls hochoxidierende Kathodenmaterialien wie $MnO_2$, $NiO_2$ oder $CoO_2$ eingesetzt werden, sollten vorzugsweise Salze mit fluorsubstituierten oder heteroaromatischen Anionen verwendet werden, um eine anodische Oxidation des Anions zu vermeiden. Die erfindungsgemäßen Elektrolyte können sowohl in primären als auch in sekundären Lithiumzellen verwendet werden.

Tabelle 1

| Ligand | Anion | $E_{HOMO}\cdot eV^{-1}$ | $Q\cdot e^{-1}$ |
|---|---|---|---|
| Brenzcatechin | $B(C_6H_4O_2)_2$- | -4,84 | -0,244 |
| 3-Fluorbrenzcatechin | $B(C_6H_3O_2F)_2$- | -5,16 | -0,234 |
| 3,6-Difluorbrenzcatechin | $B(C_6H_2O_2F_2)_2$- | -5,50 | -0,224 |
| Tetrafluorbrenzcatechin | $B(C_6O_2F_4)_2$- | -6,03 | -0,214 |
| 2,3-Dihydroxypyridin | $B(C_5H_3NO_2)_2$- | -5,20 | -0,227 |
| 2,3-Dihydroxypyrazin | $B(C_4H_2N_2O_2)_2$- | -5,65 | -0,209 |

Beispiel 1: Darstellung von Lithiumbis[1,2-benzoldiolato(2-)-O,O']borat(1-)

Das Salz wird durch Kristallisation aus konzentrierter wässriger Lösung gewonnen.

Reaktionsgleichung:

$$LiOH + B(OH)_3 + 2\ C_6H_4(OH)_2 \rightarrow LiB(C_6H_4O_2)_2 + 4\ H_2O$$

Versuchsdurchführung:

249.80 g (2.268 mol) Brenzcatechin, 47.60 g (1.134 mol) $LiOH\cdot H_2O$, 70.13 g (1.1344 mol) Borsäure und 130 ml $H_2O$ werden unter Schutzgas auf 90 - 95°C erhitzt, bis eine homogene braune Lösung entsteht. Man läßt den Kolben im Verlauf von etwa 5 Stunden auf Raumtemperatur abkühlen, wobei die Substanz in Form großer farbloser quadratischer Plättchen kristallisiert. Man stellt über Nacht bei +3°C in den Kühlschrank um die Ausbeute zu erhöhen und filtriert die Mutterlauge unter Schutzgas durch Anlegen von Wasserstrahlvakuum ab. Man trocknet bei Raumtemperatur 39 Stunden im Ölpumpenvakuum und erhält farblose Kristalle, die durch etwas braune Substanz (aus der Mutterlauge) verunreinigt sind. Die Masse beträgt 169.78 g. Es handelt sich um ein Hydrat der Zusammensetzung $LiB(C_6H_4O_2)_2\cdot 2H_2O$ (vgl. Analytik). Anschließend wird im Ölpumpenvakuum bis zur Gewichtskonstanz (39h) bei 100 - 110°C getrocknet. Die Kristalle zerfallen zu einem farblosen Pulver.
Rohausbeute: 144.84g, 0.6191mol, 54.6%

Reinigung:

143.66 g des Rohproduktes werden mit 300 ml Acetonitril versetzt. Man erwärmt unter Schutzgas bis zum leichten Sieden und gibt solange Acetonitril hinzu bis eine homogene Lösung entsteht. Man läßt über Nacht abkühlen und erhält quaderförmige farblose Nadeln. Man stellt 1 Stunde ins Eisbad und 1 Stunde ins Eis-Kochsalzbad. Die Mutterlauge kann durch Abgießen im Schutzgasstrom entfernt werden. Die Umkristallisation wird dreimal durchgeführt. Die Mutterlauge ist bei der ersten Umkristallisation gelbgrün und bei der dritten Umkristallisation farblos. Man trocknet 4 Stunden bei Raumtemperatur im Ölpumpenvakuum und erhält farblose Nadeln der Zusammensetzung $LiB(C_6H_4O_2)_2\cdot 2AN$ (vgl. Analytik). Anschließend füllt man in einen Schlenkkolben um und trocknet im Handschuhkasten unter Ölpumpenvakuum, wobei man die Temperatur in kleinen Schritten auf 150°C erhöht. Die Trocknung wird fortgeführt bis keine Gewichtsabnahme mehr feststellbar ist und NMR- spektroskopisch bei hoher Sender - und Empfängerleistung kein AN-Signal mehr nachweisbar ist. Man erhält ein farbloses Pulver.
Ausbeute: 65.46g, 0.2798mol, 76.9% pro Umkristallisation

Analytik:

Gravimetrie:

Die Massenabnahme bei der Zersetzung des Hydrates beträgt 24.80 g (1.3766 mol $H_2O$). Das ergibt 2.22 mol $H_2O$ pro mol Salz. Die Masse des AN-Solvates nimmt bei der Endtrocknung von 88.58 g auf 65.46 g ab. Das sind 23.12 g (0.5632 mol) AN bzw. 2.01 mol AN pro mol Salz.

pH-Titration:

Das Bis[1,2-benzoldiolato(2-)-O,O']borat(1-)anion ist formal aus zwei Brenzcatechineinheiten und einer $B(OH)_4^-$-Einheit zusammengesetzt. Durch Titration bei 50°C mit 0.5 N HCl wurde der Äquivalenzpunkt bestimmt und hieraus der Borgehalt berechnet. Die Titration wurde für das Rohprodukt einmal und für das gereinigte Produkt dreimal durchgeführt. Der theoretische Borgehalt beträgt 4.621%. Für das Rohprodukt wurde ein Borgehalt von 4.611% (0.22% relativer Fehler) und für das gereinigte Produkt ein Borgehalt von 4.622% (0.02% relativer Fehler) gefunden.

NMR:

Das NMR-Spektrum des gereinigten Produktes in DMSO-$D_6$ zeigt ein Singulett bei 6.5 ppm (TMS). Es handelt sich um ein AA'BB'-Spektrum, wobei die Protonen zufällig die gleiche chemische Verschiebung haben, was durch Vergleichsmessungen mit Brenzcatechindimethylether bestätigt wurde. Das Spektrum des reinen Brenzcatechins zeigt neben dem aromatischen Peak einen Peak bei 8.7 ppm (TMS), der den OH-Gruppen zuzuordnen ist. Dieser Peak tritt weder beim Rohprodukt noch beim gereinigten Produkt auf. Das bei Raumtemperatur getrocknete Rohprodukt zeigt neben dem aromatischen Peak noch einen Peak bei 3.7 ppm (TMS), der dem Kristallwasser zugeordnet werden kann. Aus der Integralkurve ergibt sich ein Wassergehalt von 2.13 mol $H_2O$ pro mol Salz für das Hydrat. Das bei Raumtemperatur getrocknete AN-Solvat zeigt neben dem aromatischen Peak ein Signal bei 2.0 ppm (TMS) das der $CH_3$-Gruppe des Acetonitrils zuzuordnen ist. Aus der Integralkurve ergibt sich ein AN-Gehalt von 1.78 mol AN pro mol Salz für das Solvat.

Wasseranalytik:

Eine Probe der gereinigten Substanz wurde in THF gelöst und der Wassergehalt nach K.F. durch Differenzbildung zu 56 ppm bestimmt.

Thermisches Verhalten:

Eine Probe der Substanz wird auf einem Stahlblech direkt mit der Bunsenflamme erhitzt. Es tritt eine grünrote Flammenfärbung sowie Verkohlung auf. Brenzcatechin läßt sich mit dem Bunsenbrenner auf einem Stahlblech leicht entzünden, wobei es schmilzt und vollständig mit gelber Flamme verbrennt.

Löslichkeitsproben im Reagenzglas:

Die Substanz ist löslich in THF, 2-Me-THF, DME, PC und schwerlöslich in Dioxolan, Diethylether und Toluol.

Beispiel 2:

Darstellung von Tetramethylammoniumbis[1,2-benzoldiolato(2-)-O,O']borat(1-)

Das Salz wird durch Kristallisation aus wässriger Lösung gewonnen.

Reaktionsgleichung:

$$N(CH_3)_4OH + B(OH)_3 + 2\ C_6H_4(OH)_2 \rightarrow N(CH_3)_4B(C_6H_4O_2)_2 + 4\ H_2O$$

Versuchsdurchführung:

86.98 g (0.7899 mol) Brenzcatechin, 24.43 g (0.39497 mol) Borsäure, 360 ml einer 10%-igen wässrigen Tetramethylammonium-hydroxidlösung und 300 ml $H_2O$ werden unter Schutzgas auf 80 - 85°C erhitzt, wobei eine schwach getrübte gelbbraune Lösung entsteht. Man impft die heiße Lösung und läßt über Nacht auf Raumtemperatur abkühlen, wobei man farblose viereckige Plättchen erhält. Das Impfen ist notwendig, weil sonst das Produkt als Öl anfällt. Zur Gewinnung von Impfkristallen wird eine Probe der Lösung entnommen, mit einem Föhn im Reagenzglas erwärmt und unter Reiben mit einem Glasstab im Eisbad auf 0°C abgekühlt.

Man gießt die Mutterlauge bei Raumtemperatur im Schutzgasstrom ab und trocknet das Rohprodukt 16 Stunden bei Raumtemperatur im Ölpumpenvakuum. Anschließend trocknet man noch 6.5 Stunden bei 60 - 70°C im Ölpumpenvakuum. Eine Veränderung der Kristalle ist nicht zu erkennen, die Masse nimmt nur um 0.3% ab. Das Salz kristallisiert frei von Kristallwasser.
Rohausbeute: 67.39 g, 0.2238 mol, 56.6%

Reinigung:

64.94 g des Rohproduktes werden mit 100 - 150 ml Aceton unter Schutzgas auf 50 - 55°C erhitzt, so daß eine homogene braune Lösung entsteht. Man läßt auf Raumtemperatur abkühlen und impft. Man erhält rechteckige farblose flache Nadeln. Man läßt über Nacht stehen, stellt 2 Stunden ins Eisbad und 45 Minuten ins Eis-Kochsalzbad. Die Mutterlauge wird im Schutzgasstrom abgegossen. Die Umkristallisation wird insgesamt 5 mal durchgeführt. Die Mutterlauge ist nach der fünften Umkristallisation klar und farblos. Die farblosen Kristalle werden 4 Stunden bei Raumtemperatur im Ölpumpenvakuum getrocknet, wobei sie zu einem farblosen Pulver zerfallen. Anschließend wird noch 3 Stunden bei 50 - 70°C im Ölpumpenvakuum getrocknet. Eine Gewichtsabnahme ist hierbei nicht mehr feststellbar. Offenbar handelt es sich bei den Kristallen um ein Acetonsolvat, das bereits bei Raumtemperatur im Ölpumpenvakuum zerfällt.
Ausbeute: 33.57 g, 0.1147 mol, 87.6% pro Umkristallisation

Analytik:

NMR:

Das NMR-Spektrum des Rohproduktes in DMSO-$D_6$ zeigt einen Peak bei 3.0 ppm (TMS), der den Methylgruppen zuzuordnen ist, sowie einen Peak bei 6.5 ppm (TMS), der den Protonen des Bis[1,2-benzoldiolato(2-)-O,O']borat(1-) anions zuzuordnen ist. Weiterhin finden sich mehrere kleine Peaks im Bereich von 6.5-6.9 ppm (TMS), die offenbar auf Verunreinigungen zurückzuführen sind. $H_2O$ ist nicht nachweisbar. Das NMR-Spektrum des gereinigten Produktes zeigt lediglich die beiden Peaks bei 3.0 und 6.5 ppm (TMS). Das Integralverhältnis entspricht im Rahmen der Meßgenauigkeit dem theoretischen Wert.

Löslichkeitsproben im Reagenzglas:

Die Substanz ist löslich in PC, Dioxolan und AN, gering löslich in DME und THF und schwerlöslich in Toluol.

Beispiel 3:

Darstellung von Butyltriethylammoniumbis[1,2-benzoldiolato(2-)-O,O']borat(1-)

Das Salz wird durch Ausfällung von Lithiumchlorid in Acetonitril dargestellt.

Reaktionsgleichung:

$$N(C_4H_9)(C_2H_5)_3Cl + LiB(C_6H_4O_2)_2 \rightarrow N(C_4H_9)(C_2H_5)_3B(C_6H_4O_2)_2 + LiCl \downarrow$$

Versuchsdurchführung:

5.49 g (23.47 mmol) Lithiumbis[1,2-benzoldiolato(2-)-O,O']borat(1-), 4.53 g (23.38 mmol) Butyltriethylammoniumchlorid und 30 ml Acetonitril werden im Handschuhkasten in einem Erlenmeyerkolben bei Raumtemperatur gerührt. Es entsteht eine farblose Suspension von LiCl. Man filtriert und erhält einen feinkristallinen farblosen Niederschlag von LiCl sowie ein klares farbloses Filtrat. Das Filtrat wird im Ölpumpenvakuum bei Raumtemperatur bis zur Trockene eingedampft und die farblose feste Substanz 17 Stunden bei Raumtemperatur getrocknet.
Rohausbeute: 8.59 g, (22.29 mmol), 95.4%

Reinigung:

8.18 g der Substanz werden unter Schutzgas bei Raumtemperatur mit 19 ml AN versetzt. Man erhält eine klare farblose Lösung. Man gießt anschließend 50 ml Diethylether hinzu, so daß eine leicht trübe Lösung entsteht. Man filtriert unter Schutzgas und erhält eine klare farblose Lösung sowie eine geringe Menge eines farblosen Feststoffes (wahrscheinlich LiCl). Man stellt eine Nacht ins Gefrierfach (-25°C) und erhält farblose Plättchen. Die Mutterlauge wird im Schutzgasstrom abgegossen. Die Umkristallisation wird zweimal durchgeführt. Anschließend trocknet man 2 Stunden bei Raumtemperatur und 19 Stunden bei 50 - 65°C im Ölpumpenvakuum. Die Masse nimmt hierbei lediglich um 0.6% ab, eine Solvatbildung findet nicht statt.
Ausbeute: 6.92 g, 17.96 mmol, 92.0% pro Umkristallisation

Analytik:

NMR:

Das NMR-Spektrum ist wie erwartet die Überlagerung der Spektren des reinen Butyltriethylammoniumchlorids und des Lithiumbis[1,2-benzoldiolato(2-)-O,O']borates(1-).
Schmelzpunkt: 86-87°C

Beispiel 4: Darstellung von Lithiumbis[salicylato(2-)]borat(1-)

Reaktionsgleichung:

$$LiOH + B(OH)_3 + 2\ C_7H_6O_3 \rightarrow LiB(C_7H_4O_3)_2 + 4\ H_2O$$

Versuchsdurchführung:

244.90 g (1.7731 mol) Salicylsäure, 37.20 g (0.8860 mol) $LiOH \cdot H_2O$, 54.82 g (0.8866 mol) Borsäure und 100 ml $H_2O$ werden unter Schutzgas bis zum leichten Sieden erhitzt. Es entsteht eine homogene farblose Lösung. Man läßt auf Raumtemperatur abkühlen und erhält einen voluminösen farblosen feinkristallinen Niederschlag, der nicht filtrierbar ist. Man entnimmt Impfkristalle, heizt nochmals bis nahe zum Siedepunkt auf, stellt den Kolben in ein mit heißem Wasser gefülltes Dewargefäß und impft. Man erhält beim Abkühlen einen feinkristallinen Niederschlag. Nach 2 Tagen stellt man den Kolben 7 Stunden bei + 10°C und 2 Tage bei 0°C in den Kühlschrank. Man setzt ein Zwischenstück mit Fritte sowie einen zweiten Kolben auf und filtriert die Mutterlauge durch Anlegen von Wasserstrahlvakuum bei 0°C ab. Die Substanz wird 7 Stunden bei 0°C und ca. 50 Stunden bei Raumtemperatur im Ölpumpenvakuum getrocknet. Man erhält 197.76 g Produkt. Man trocknet 280 Stunden bei 80 - 180°C, wobei das Gewicht auf 184.76 g abnimmt. Nach einer Probenentnahme wird nochmals 93 Stunden bei 170 - 180°C getrocknet, wobei das Gewicht von 184.59 g auf 183.15 g abnimmt.
Rohausbeute: 183.15 g, 0.63194 mol, 71.2%

Reinigung:

179.58 g des Rohproduktes werden mit 850 ml Acetonitril unter Schutzgas bis zum leichten Sieden erhitzt. Man erhält eine leichte Trübung, die auch bei einer Erhöhung der Lösungsmittelmenge auf 960 ml nicht verschwindet. Man filtriert unter Schutzgas und läßt auf Raumtemperatur abkühlen. An der Kolbenwand bildet sich eine Schicht farbloser Kristalle. Man stellt 3 Stunden bei 0°C in den Kühlschrank und 1 Nacht bei -25°C ins Gefrierfach. Die Mutterlauge wird anschließend im Schutzgasstrom abgegossen. Die Umkristallisation wird insgesamt dreimal durchgeführt. Bei der zweiten Umkristallisation tritt wiederum eine Trübung auf (Filtration), bei der dritten Umkristallisation bleibt die Lösung klar. Man trocknet 1.5 Stunden bei Raumtemperatur im Ölpumpenvakuum und erhält 151.84 g Substanz. Anschließend trocknet man 171 Stunden bis zur Gewichtskonstanz im Ölpumpenvakuum, wobei man die Temperatur beginnend bei 80 - 90°C langsam auf 150 - 155°C erhöht. Man erhält ein farbloses Pulver.
Ausbeute: 118.11 g, 0.4073 mol, 86.4% pro Umkristallisation

Analytik:

Gravimetrie:

Während des Trocknens des Rohproduktes bei erhöhter Temperatur nimmt die Masse um 11.44 g (0.6350 mol $H_2O$) ab. Das sind 1.00 mol $H_2O$ pro mol Salz. Die Masse des Endproduktes nimmt bei der Trocknung um 33.73 g (0.8216 mol AN) ab. Das sind 2.02 mol AN pro mol Salz. Die Solvate haben demnach die Zusammensetzung $LiB(C_7H_4O_3)_2 \cdot H_2O$ und $LiB(C_7H_4O_3) \cdot 2AN$.

pH-Titration:

Das Bis[salicylato(2-)]borat(1-)anion ist formal aus zwei Salicylsäureeinheiten und einer $B(OH)_4^-$- Einheit zusammengesetzt. Lithiumbis[salicylato(2-)]borat(1-) reagiert deswegen in wässriger Lösung durch Hydrolyse sauer. Durch Titration mit 0.1 N NaOH bei 70°C wurde der Äquivalenzpunkt bestimmt. Der theoretisch zu erwartende Laugenbedarf beträgt 1 mol NaOH pro mol Salz. Die Titration wurde für das Rohprodukt einmal und für das gereinigte Produkt dreimal durchgeführt. Für das Rohprodukt wurde ein Laugenbedarf von 0.996 mol NaOH pro mol Salz und für das gereinigte Produkt ein Laugenbedarf von 0.9992 mol NaOH pro mol Salz gefunden.

NMR:

Das bei Raumtemperatur getrocknete Rohprodukt in DMSO-D6 zeigt ein Multiplett mit einem Schwerpunkt bei 7.3 ppm (TMS), das dem aromatischen Rest zuzuordnen ist, sowie ein Singulett bei 3.5 ppm, das auf Wasser zurückzuführen ist. Aus der Integralkurve ergibt sich ein Wassergehalt von 1.01 mol $H_2O$ pro mol Salz. Das bei erhöhter Temperatur getrocknete Rohprodukt zeigt noch einen winzigen Wasserpeak, der jedoch nicht quantitativ ausgewertet werden kann, weil käufliches DMSO-D6 sowie TMS stets einen geringen Restwassergehalt zeigen, was durch Vergleichsmessungen mit dem reinen Lösungsmittel bestätigt wurde. Das aus AN umkristallisierte und bei Raumtemperatur getrocknete Produkt zeigt neben dem aromatischen Multiplett noch ein Singulett bei 2.0 ppm (TMS), das dem im Solvat gebundenen AN zugeordnet werden kann. Aus der Integralkurve ergibt sich ein AN-Gehalt von 1.70 mol AN pro mol Salz. Der etwas zu geringe Wert ist wahrscheinlich auf Verdampfungsverluste beim Befüllen des Röhrchens im Handschuhkasten zurückzuführen. Das gereinigte und bei erhöhter Temperatur getrocknete Produkt zeigt nur ein Multiplett bei 7.3 ppm (TMS). Bei hoher Sender- und Empfängerleistung ist noch ein winziger Peak bei 2.0 ppm erkennbar, der jedoch an der Nachweisgrenze der Methode liegt und nicht mehr quantitativ ausgewertet werden kann. Es wurde ein Vergleichsspektrum mit Salicylsäure aufgenommen, das einen breiten Peak bei 12.4 ppm (TMS) zeigt, der den Protonen der COOH und OH Gruppen zugeordnet werden kann. Dieser Peak ist im NMR-Spektrum des Lithiumbis[salicylato(2-)]borates(1-) nicht nachweisbar.

Wasseranalytik:

Eine Probe der Substanz wurde in PC gelöst und der Wassergehalt nach KF. durch Differenzbildung ermittelt. Für das getrocknete Rohprodukt wurde ein $H_2O$-Gehalt von 2200 ppm und für das gereinigte Produkt ein Wassergehalt von 64 ppm gefunden.

Thermisches Verhalten:

Eine Probe des getrockneten Rohproduktes wird auf einem Edelstahlblech direkt mit der Bunsenflamme erhitzt. Die Substanz brennt mit grünroter Flammenfärbung, es tritt Verkohlung ein.

Löslichkeitsproben im Reagenzglas:

Die Substanz ist löslich in THF, 2-Me-THF, DME, PC, Dioxolan und Aceton und schwerlöslich in Diethylether. In THF und 2-Me-THF bilden sich jedoch bei längeren Standzeiten (einige Stunden bis einige Tage) farblose Kristalle (Solvat). Die Substanz neigt zur Bildung von übersättigten Lösungen.

Beispiel 5: Leitfähigkeit

Die Leitfähigkeit einiger Lösungen wurde bei Raumtemperatur mit einer kleinen Meßzelle und einer handelsüblichen Brücke gemessen. Die Temperatur wurde mit einem Quecksilberthermometer gemessen. Die in Tabelle 2 angegebenen spezifischen Leitfähigkeiten sind bei willkürlichen Konzentrationen gemessen. Es handelt sich nicht um $\kappa_{max}$-Werte. Die Werte sind nicht sehr präzise, sie sollen lediglich zur groben Abschätzung der erreichbaren Leitfähigkeit dienen.

Tabelle 2

| System | $\vartheta$°$C^{-1}$ | $\kappa$ $mS^{-1}cm$ |
|---|---|---|
| 1.231 molal $LiB(C_6H_4O_2)_2$ in PC | 27 | 0,6 |
| 1.184 molal $LiB(C_6H_4O_2)_2$ in THF | 29 | 1,4 |

Tabelle 2 (fortgesetzt)

| System | ϑ°C⁻¹ | κ mS⁻¹cm |
|---|---|---|
| 0.899 molal $LiB(C_6H_4O_2)_2$ in DME | 26 | 1,7 |
| 0.595 molal $LiB(C_6H_4O_2)_2$ in 2-Methyl-THF | 29 | 0,4 |
| 1.11 molal $LiB(C_6H_4O_2)_2$ in einer Mischung aus 45.7 Gew% PC und 54.3 Gew% DME | 25 | 3,0 |
| 0.519 molal $N(CH_3)_4B(C_6H_4O_2)_2$ und 0.293 molal $LiB(C_6H_4O_2)_2$ in PC | 17 | 2,8 |
| 0.561 molal $N(CH_3)_4B(C_6H_4O_2)_2$ und 0.271 molal $LiB(C_6H_4O_2)_2$ in einer Mischung aus 60.4 Gew% THF und 39.6 Gew% PC | 18.5 | 5,1 |
| 0.400 molal $N(CH_3)_4B(C_6H_4O_2)_2$ und 0.555 molal $LiB(C_6H_4O_2)_2$ in einer Mischung aus 52.8 Gew% PC und 47.2 Gew% DME | 23 | 5,5 |
| 0.713 molal $LiB(C_7H_4O_3)_2$ in DME | 27 | 0,8 |
| 0.775 molal $LiB(C_7H_4O_2)_2$ in PC | 29 | 0,4 |
| 0.840 molal $LiB(C_7H_4O_2)_2$ in einer Mischung aus 59.8 Gew% PC und 40.2 Gew% DME | 26 | 1,7 |

Beispiel 6: CV des Grundstromes

An einer Edelstahlelektrode mit einer Fläche von 0.503 $cm^2$ wurden jeweils 5 Zyklovoltammogramme hintereinander aufgenommen. Hierzu wurde ausgehend vom Ruhepotential mit einer Potentialvorschubsgeschwindigkeit von 20 mV/s zu 0 mV gegen $Li/Li^+$ und wieder zurück zum Ruhepotential gefahren. Es wurde Lithiumbis[1,2-benzoldiolato (2-)-O,O']borat(1-) in organischen Lösungsmitteln und Lösungsmittelgemischen sowie unter Zusatz von Tetraalkylammoniumbis [1,2-benzoldiolato(2-)-O,O']boraten(1-) untersucht. In Fig.1 bis Fig.4 sind die Grundstromzyklovoltammogramme einiger Systeme gezeigt. Die Kurven sind wenig strukturiert und zeigen keinen Reduktionspeak, der sich eindeutig vom Grundstrom abhebt. Eine Reduktion der Tetramethylammoniumionen ist nicht zu erkennen (vgl. Fig.1 und 2).

Beispiel 7: CV zur Lithiumabscheidung

An einer Edelstahlelektrode mit einer Fläche von 0.503 $cm^2$ wurden jeweils 5 Zyklovoltammogramme hintereinander aufgenommen. Die Experimente wurden unmittelbar nach Beendigung der Grundstrom CV's ohne Wechsel der Arbeitselektrode durchgeführt. Hierzu wurde ausgehend vom Ruhepotential mit einer Potentialvorschubsgeschwindigkeit von 20 mV/s zuerst zu -500 mV gegen $Li/Li^+$, dann zu +3000 mV gegen $Li/Li^+$ und schließlich zurück zum Ruhepotential gefahren. Die Ausbeute wurde durch numerische Integration in der I-t-Darstellung bestimmt. Die Fig.5 bis 9 zeigen die Zyklovoltammogramme einiger Systeme. Rechts neben den CV's ist die über 5 Zyklen gemittelte Ausbeute angegeben.

Wie man aus den gezeigten Zyklovoltammogrammen sieht, zeigen Systeme mit PC als Lösungsmittel oder Mischungen von PC mit Ethern relativ hohe Ausbeuten, während Systeme mit reinem DME, 2-Me-THF und THF (hier nicht dargestellt) als Lösungsmittel nur geringe Ausbeuten ergeben. Tetramethylammoniumionen beeinflußen das Zyklisierverhalten nur unwesentlich.

Beispiel 8: Anodisches Potentiallimit

Zur Ermittelung des anodischen Potentialfensters wurden an einer Edelstahlelektrode mit einer Fläche von 0.503 $cm^2$ jeweils 5 Zyklovoltammogramme hintereinander aufgenommen. Hierzu wurde ausgehend vom Ruhepotential mit einer Potentialvorschubsgeschwindigkeit von 20 mV/s zuerst zu 4000 mV gegen $Li/Li^+$, dann zu 0 mV gegen $Li/Li^+$ und schließlich zurück zum Ruhepotential gefahren. In Fig.10 ist ein typisches CV gezeigt. Fig.11 und 12 zeigen die Vergrößerung des anodischen Bereiches für zwei Systeme. Das anodische Potentiallimit ist nur geringfügig abhängig von der Zusammensetzung der Lösung und beträgt etwa 3.6 V gegen $Li/Li^+$.

Beispiel 9: Zyklisierung auf Edelstahl

Zur Ermittelung der Zyklisierausbeute auf Edelstahl wurden galvanostatische Zyklisierexperimente mit einer Ladungsdichte von 100 $mC/cm^2$ und einer Stromdichte von 1 $mA/cm^2$ auf einer Edelstahlelektrode mit einer Fläche von 0.503 $cm^2$ durchgeführt. Einige Beispiele sind in den Fig.13 - 15 gezeigt. In PC-haltigen Lösungen ist die Ausbeute in den ersten Zyklen relativ hoch, erreicht ein Maximum und fällt dann zu kleinen Werten ab. Das Lithium scheidet sich in Form grauer Nadeln ab, die sich auch nach einigen Tagen Standzeit im Elektrolyten nicht auflösen. Die Ausbeuteverluste sind daher auf eine Dekontaktierung des Lithiums zurückzuführen. In Lösungen, die nur DME, THF oder

2-Methyl-THF als Lösungsmittel enthalten ist die Zyklisierausbeute niedrig. Ein signifikanter Einfluß von Tetraalkylammoniumsalzen auf die Zyklisierausbeute ist nicht zu erkennen. Eine sichtbare Veränderung der Lösung (Gasblasenentwicklung oder Verfärbung) wurde bei den untersuchten Lösungen nicht beobachtet.

Beispiel 10: Zyklisierung auf Kohlenstoff

An einer glassy - Carbon Elektrode (Metrohm) mit eine Fläche von 0.0707 $cm^2$ (3 mm Durchmesser) wurde ein Zyklisierexperiment mit einer Ladungsdichte von 100 $mC/cm^2$ und einer Stromdichte von 1 $mA/cm^2$ durchgeführt. Die Potentialschranke wurde auf 1500 mV gegen $Li/Li^+$ gesetzt. Als Elektrolyt wurde willkürlich eine Lösung gewählt, die 0.561 molal an Tetramethylammoniumbis[1,2-benzoldiolato(2-)-O,O']borat(1-) und 0.271 molal an Lithiumbis[1,2-benzoldiolato(2- )-O,O']borat(1-) in einer Mischung aus 39.6 Gew.% PC und 60.4 Gew.% THF war. Insgesamt wurden 1100 Zyklen mit einer Pause von 5 Minuten nach dem 100. Zyklus, 145 Minuten nach dem 300. Zyklus, 3 Minuten nach dem 400. Zyklus und 94 Minuten nach dem 700. Zyklus gefahren. Die Zyklisierausbeute steigt hierbei stetig an. Fig.16 zeigt die ersten 100 Zyklen und Fig.17 die letzten 400 Zyklen. Die Kurven zeigen das erwartete Aussehen. In_den ersten Zyklen ist die Ausbeute gering, weil der größte Teil der Ladung durch irreversible Prozesse (z.B. Deckschichtbildung) verbraucht wird. Mit zunehmender Zyklenzahl steigt die Ausbeute zu hohen Werten hin an. Eine Veränderung des Elektrolyten (Gasblasenbildung oder Verfärbung) wurde nicht beobachtet.

Beispiel 11: Zyklisierung auf Lithium

Zur Ermittelung der Zyklisierausbeute wurde eine Halbzelle verwendet. Diese besteht aus einer Edelstahlarbeitselektrode auf die eine etwa 0.1 mm dicke Lithiumschicht aufgepreßt ist, einem Lithiumblech als Gegenelektrode, einem Separator und einem Zellcontainer aus Glas. Der Elektrodenabstand betrug ca. 3 mm, die Fläche der Arbeitselektrode 1 $cm^2$ und das Elektrolytvolumen 3 bis 4 $cm^3$. Als Separator wurde Polypropylen (Celgard 2400) verwendet. Die Lösung war 0.400 molal an Tetramethylammoniumbis[1,2-benzoldiolato(2-)-O,O']borat(1-) und 0.555 molal an Lithiumbis [1,2-benzoldiolato(2-)-O,O'])borat(1-) in einer Mischung aus 52.8 Gew.% PC und 47.2 Gew% DME. Es wurde mit einer Ladestromdichte von 0.5 $mA/cm^2$ und einer Entladestromdichte von 1.0 $mA/cm^2$ sowie einer DOD von 22.6% zyklisiert. Die aufgepreßte Grundladung betrug 101.62 C. Bereits im ersten Zyklus bilden sich graue Dendriten auf der Gegenelektrode. Eine Gasblasenbildung oder Verfärbung des Elektrolyten wurde nicht beobachtet. Am Ende der Zyklisierung ist der Raum zwischen den Elektroden mit Lithiumschlamm ausgefüllt. Es wurden 4.90 Zyklen erreicht.

## Patentansprüche

1. Ein Elektrolyt zur Verwendung in einer galvanischen Zelle, dadurch gekennzeichnet, daß er wenigstens eine Verbindung der Zusammensetzung $ABL_2$ enthält, wobei A Lithium oder ein quartäres Ammoniumion, B Bor und L einen zweizähnigen Liganden, der über zwei Sauerstoffatome an das Boratom gebunden ist, bedeutet, mit der Maßgabe, daß wenigstens ein Lithiumsalz im Elektrolyten enthalten ist.

2. Elektrolyt gemäß Anspruch 1 dadurch gekennzeichnet, daß er wenigstens eine Verbindung der Zusammensetzung $ABL_2$ gelöst in einem organischen Lösungsmittel, einer Mischung von organischen Lösungsmitteln, einem oder mehreren Polymeren oder einer Mischung eines oder mehrerer Polymere mit wenigstens einem organischen Lösungsmittel enthält.

3. Elektroyt gemäß Anspruch 1 und 2 dadurch gekennzeichnet, daß das quartäre Ammoniumion die Zusammensetzung $NR_4$, $NR_3^A R^B$, $NR_2^C$ oder $NR^CR^D$ mit den organischen Resten R, $R^A$, $R^B$, $R^C$ und $R^D$ hat.

4. Elektrolyt gemäß Anspruch 1 bis 3 dadurch gekennzeichnet, daß er wenigstens eine Verbindung der Zusammensetzung $ABL_2$ enthält, die in Propylencarbonat oder Butylencarbonat oder einer Lösungsmittelmischung die wenigstens Propylencarbonat, Butylencarbonat oder Ethylencarbonat enthält, gelöst ist.

5. Elektrolyt gemäß den Ansprüchen 1 bis 4, dadurch gekennzeichnet, daß der Ligand L wenigstens eine aromatische Gruppe enthält.

6. Elektrolyt gemäß Anspruch 5, dadurch gekennzeichnet, daß der Ligand L wenigstens einen aromatischen Sechsring enthält.

7. Elektrolyt gemäß Anspruch 6, dadurch gekennzeichnet, daß der aromatische Sechsring wenigstens ein an den

Ring gebundenes Fluoratom und/oder wenigstens ein Stickstoffatom im Ring enthält.

**8.** Elektrolyt gemäß Anspruch 7, dadurch gekennzeichnet, daß der Ligand L die Zusammensetzung $C_6H_3FO_2$, $C_6H_2F_2O_2$, $C_6HF_3O_2$ oder $C_6F_4O_2$ hat.

**9.** Elektrolyt gemäß Anspruch 7, dadurch gekennzeichnet, daß der Ligand L die Zusammensetzung $C_5H_3NO_2$ oder $C_4H_2N_2O_2$ hat.

**10.** Elektrolyt gemäß Anspruch 6, dadurch gekennzeichnet, daß der Ligand L die Zusammensetzung $C_6H_{(4-x)}R_xO_2$ hat, wobei x eine ganze Zahl von 0 bis 4 und R ein Alkylrest insbesondere ein Methylrest ist.

**11.** Elektrolyt gemäß den Ansprüchen 1 bis 6, dadurch gekennzeichnet, daß es sich bei der Verbindung $ABL_2$ um Lithiumbis[1,2-benzoldiolato(2-)-O,O']borat(1-) $LiB(C_6H_4O_2)_2$, oder um ein Tetraalkylammoniumbis[1,2-benzoldiolato(2-)-O,O']borat(1-) der Zusammensetzung $NR_4B(C_6H_4O_2)_2$ oder $NR_3^A R^B B(C_6H_4O_2)_2$ handelt, wobei R, $R^A$ und $R^B$ Alkylreste sind.

**12.** Elektrolyt gemäß den Ansprüchen 1 bis 6, dadurch gekennzeichnet, daß es sich bei der Verbindung $ABL_2$ um Lithiumbis[1,2-benzoldiolato(2-)-O,O']borat(1-) $LiB(C_6H_4O_2)_2$ handelt.

**13.** Elektrolyt gemäß den Ansprüchen 1 bis 6, dadurch gekennzeichnet, daß es sich bei der Verbindung $ABL_2$ um Lithiumbis[salicylato(2-)]borat(1-) $LiB(C_7H_4O_3)_2$ handelt.

**14.** Galvanische Zelle mit einer Kathode, einer Anode und einem Elektrolyten nach einem der Ansprüche 1 bis 13.

## Claims

**1.** An electrolyte for use in a galvanic cell, characterized in comprising at least one compound represented by the formula $ABL_2$, wherein A is lithium or a quarternary ammonium ion, B is boron, and L is a bidentate ligand, which is linked to the central boron atom by two oxygen atoms, with the proviso that the electrolyte comprises at least one lithium salt

**2.** The electrolyte in accordance with claim 1, characterized in comprising at least one compound represented by the formula $ABL_2$, which is dissolved in an organic solvent, a mixture of organic solvents, one or more polymers, or a mixture of one ore more polymers and at least one organic solvent

**3.** The electrolyte in accordance with claim 1 and 2, wherein the quarternary ammonium ion is represented by the formula $NR_4$, $NR_3^A R^B$, $NR_2^C$ or $NR^CR^D$, where R, $R^A$, $R^B$, $R^C$ and $R^D$ represent organic residues.

**4.** The electrolyte in accordance with claims 1 to 3, comprising at least one compound represented by the formula $ABL_2$, which is dissolved in propylene carbonate or butylene carbonate, or in a mixture of solvents comprising at least propylene carbonate, butylene carbonate or ethylene carbonate.

**5.** The electrolyte in accordance with claims 1 to 4, wherein the ligand L comprises at least one aromatic group.

**6.** The electrolyte in accordance with claim 5, wherein the ligand L comprises at least one aromatic six-membered ring.

**7.** The electrolyte in accordance with claim 6, wherein the aromatic six-membered ring comprises at least one fluor atom linked to the ring, and/or at least one nitrogen atom within the ring.

**8.** The electrolyte in accordance with claim 7, wherein the ligand L is represented by the formula $C_6H_3FO_2$, $C_6H_2F_2O_2$, $C_6HF_3O_2$ or $C_6F_4O_2$.

**9.** The electrolyte in accordance with claim 7, wherein the ligand L is represented by the formula $C_5H_5NO_2$ or $C_4H_2N_2O_2$.

**10.** The electrolyte in accordance with claim 7, wherein the ligand L is represented by the formula $C_6H_{(4-x)}R_xO_2$, where x is an integer from 0 up to 4, and R is an alkyl resdue, in particular a methyl residue.

11. The electrolyte in accordance with claims 1 to 6, wherein the compound $ABL_2$ is lithium bis[1,2-benzenediolato (2-)-O,O']borate(1-) $LiB(C_6H_4O_2)_2$ or a tetraalkylammonium bis[1,2-benzenediolato(2-)-O,O']borate(1-) represented by the formula $NR_4B(C_6H_4O_2)_2$ or $NR^A_3\,R^BB(C_6H_4O_2)_2$, where R, $R^A$, and $R^B$ are alkyl residues.

12. The electrolyte in accordance with claims 1 to 6, wherein the compound $ABL_2$ is lithium bis[1,2-benzenediolato (2-)]borate(1-) $LiB(C_6H_4O_2)_2$.

13. The electrolyte in accordance with claims 1 to 6, wherein the compound $ABL_2$ is lithium bis[salicylato(2-)]borate (1-) $LiB(C_7H_4O_3)_2$.

14. A galvanic cell comprising a cathode, an anode, and an electrolyte according to anyone of claims 1 to 13.

**Revendications**

1. Electrolyte destiné à une utilisation dans une pile galvanique, caractérisé en ce qu'il comporte au moins un composé représenté par la formule $ABL_2$, dans laquelle A est du lithium ou un ion ammonium quaternaire, B est du bore, et L est un coordinat bidentate, qui est relié à l'atome de bore central par deux atomes d'oxygène, pourvu que l'électrolyte comporte au moins un sel de lithium.

2. Electrolyte selon la revendication 1, caractérisé en qu'il comporte au moins un composé représenté par la formule $ABL_2$, qui est dissous dans un solvant organique, un mélange de solvants organiques, un ou plusieurs polymères, ou un mélange d'un ou de plusieurs polymères et au moins un solvant organique.

3. Electrolyte selon la revendication 1 ou 2, dans lequel l'ion ammonium quaternaire est représenté par la formule $NR_4$, $NR^A_3R^B$, $NR^C_2$ ou $NR^CR^D$, où R, $R^A$, $R^B$, $R^C$ et $R^D$ représentent les résidus organiques.

4. Electrolyte selon les revendications 1 à 3, comportant au moins un composé représenté par la formule $ABL_2$, qui est dissous dans du carbonate de propylène ou du carbonate de butylène, ou dans un mélange de solvants comportant au moins du carbonate de propylène, du carbonate de butylène ou du carbonate d'éthylène.

5. Electrolyte selon l'une des revendications 1 à 4, dans lequel le coordinat L comporte au moins un groupe aromatique.

6. Electrolyte selon la revendication 5, dans lequel le coordinat L comporte au moins un noyau hexagonal aromatique.

7. Electrolyte selon la revendication 6, dans lequel le noyau hexagonal aromatique comporte au moins un atome de fluor lié au noyau, et/ou au moins un atome d'azote à l'intérieur du noyau.

8. Electrolyte selon la revendication 7, dans lequel le coordinat L est représenté par la formule $C_6H_3FO_2$, $C_6H_2F_2O_2$, $C_6HF_3O_3$, ou $C_6F_4O_2$.

9. Electrolyte selon la revendication 7, dans lequel le coordinat L est représenté par la formule $C_5H_3NO_2$ ou $C_4H_2N_2O_2$.

10. Electrolyte selon la revendication 7, dans lequel le coordinat L est représenté par la formule $C_6H_{(4-x)}R_xO_2$, où x est un entier de 0 à 4, et R est un résidu alkyle, en particulier un résidu de méthyle.

11. Electrolyte selon les revendications 1 à 6, dans lequel le composé $ABL_2$ est du bis [1,2-benzènediolato(2-)-O,O'] borate(1-) $LiB(C_6H_4O_2)_2$ de lithium ou un bis[1,2-benzènediolato(2-)-O,O']borate(1-) d'ammonium tétraalkyle représenté par la formule $NR_4B(C_6H_4O_2)_2$ ou $NR^A_3R^BB(C_6H_4O_2)_2$, où R, $R^A$ et $R^B$ sont des résidus alkyles.

12. Electrolyte selon les revendications 1 à 6, dans lequel le composé $ABL_2$ est du bis[1,2-benzènediolato(2-)-O,O'] borate(1-) $LiB(C_6H_4O_2)_2$ de lithium.

13. Electrolyte selon les revendications 1 à 6, dans lequel le composé $ABL_2$ est du bis[salicylato(2-)] borate(1-) LiB $(C_7H_4O_3)_2$ de lithium.

**14.** Pile galvanique comportant une cathode, une anode, et un électrolyte selon l'une quelconque des dications 1 à 13.

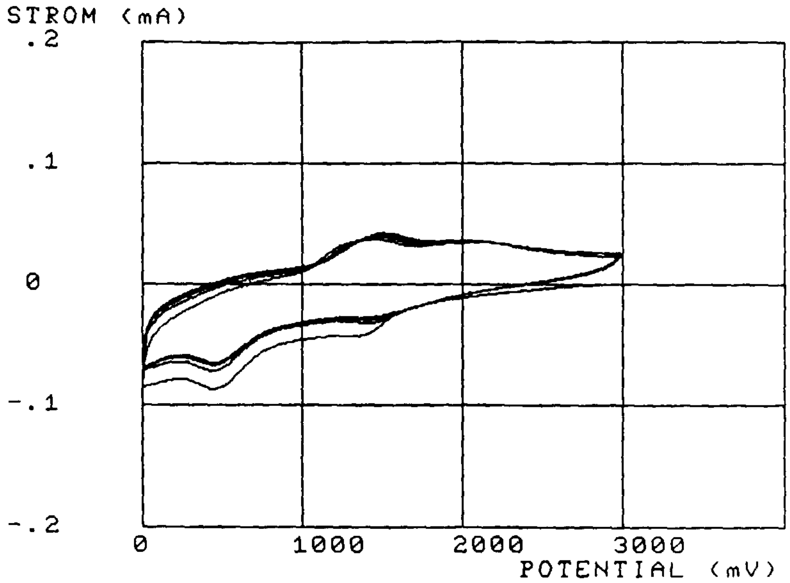


**Fig.1:** 1,231 molal $LiB(C_6H_4O_2)_2$ in PC

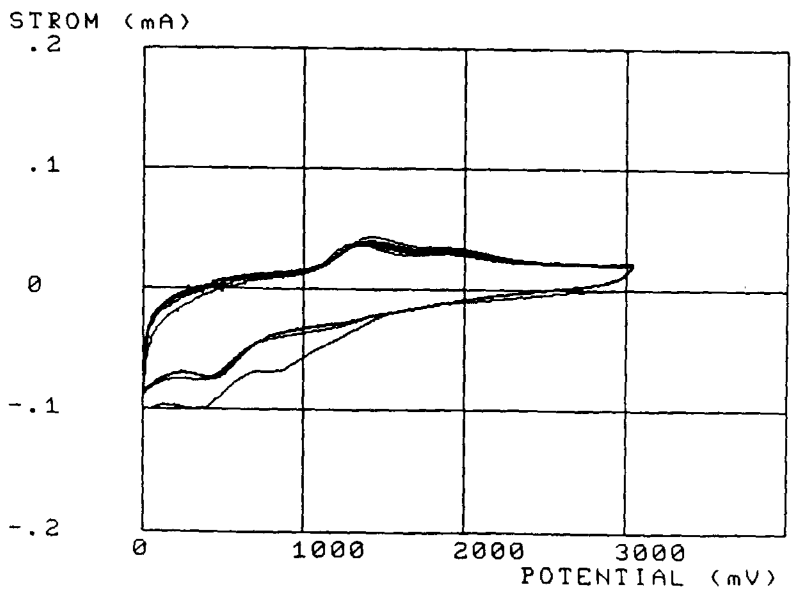


**Fig.2:** 0,293 molal $LiB(C_6H_4O_2)_2$, 0,519 molal $N(CH_3)_4B(C_6H_4O_2)_2$ in PC

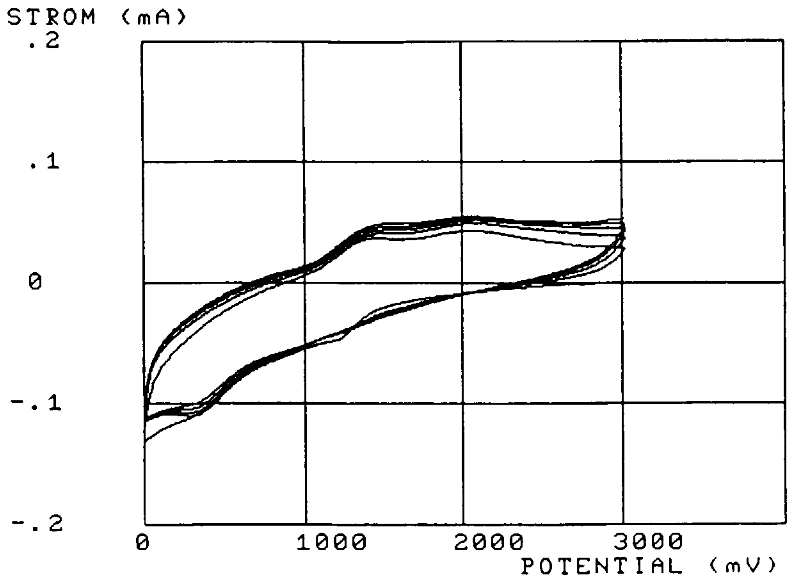


**Fig.3:** 0,595 molal $LiB(C_6H_4O_2)_2$ in 2-Me-THF

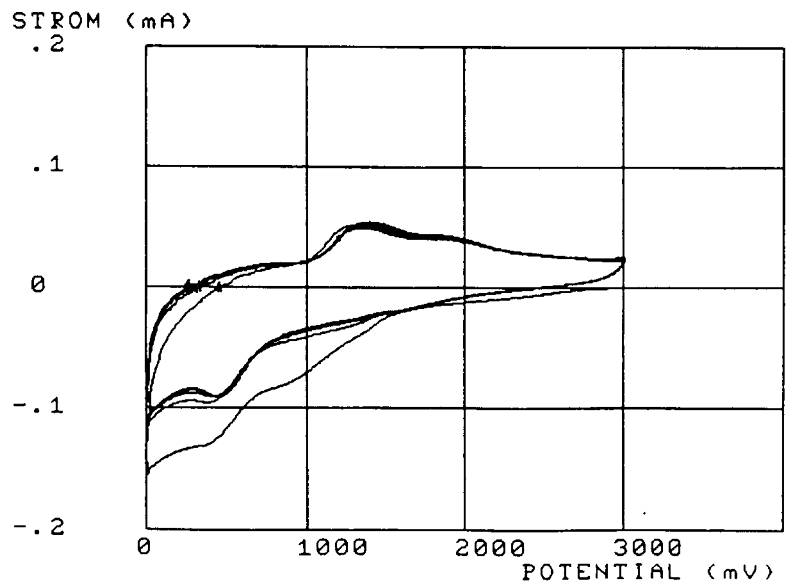


**Fig.4:** 0,473 molal $LiB(C_6H_4O_2)_2$, 0,896 molal $N(CH_3)_4B(C_6H_4O_2)_2$ in einer Mischung aus 56,9 Gew% PC und 43,1 Gew% DME

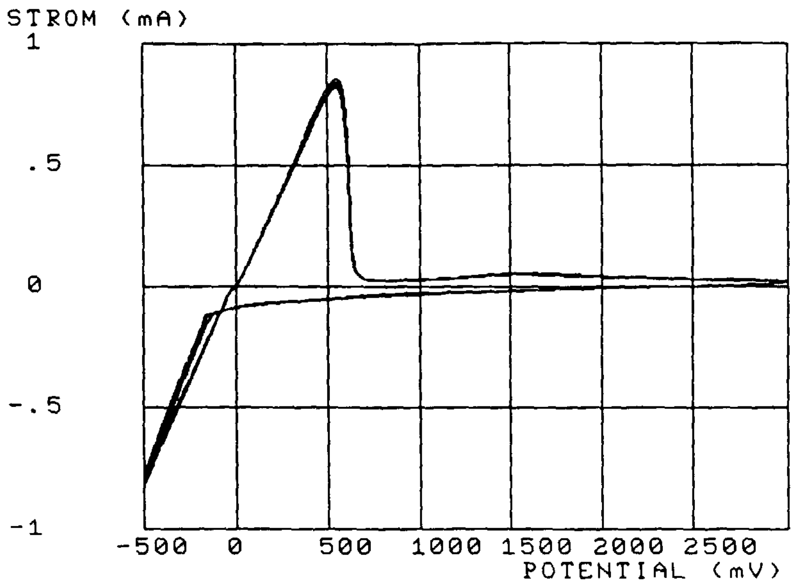


91.8%

**Fig.5:** 1,231 molal $LiB(C_6H_4O_2)_2$ in PC

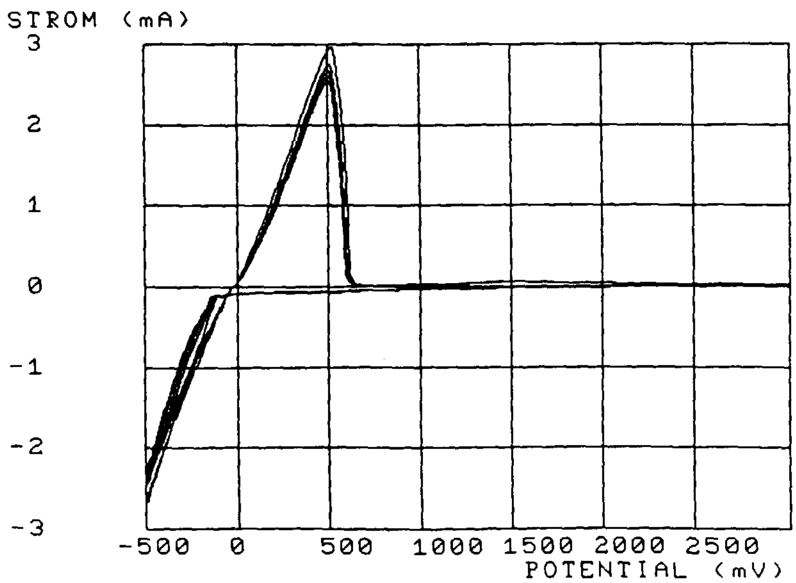


95.7%

**Fig.6:** 0,293 molal $LiB(C_6H_4O_2)_2$, 0,519 molal $N(CH_3)_4B(C_6H_4O_2)_2$ in PC

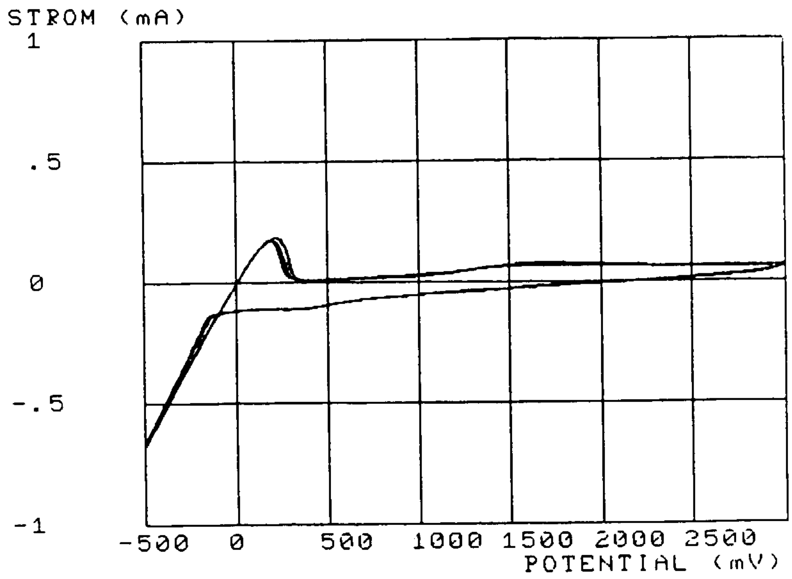


12.3%

**Fig.7:** 0,595 molal $LiB(C_6H_4O_2)_2$ in 2-Me-THF

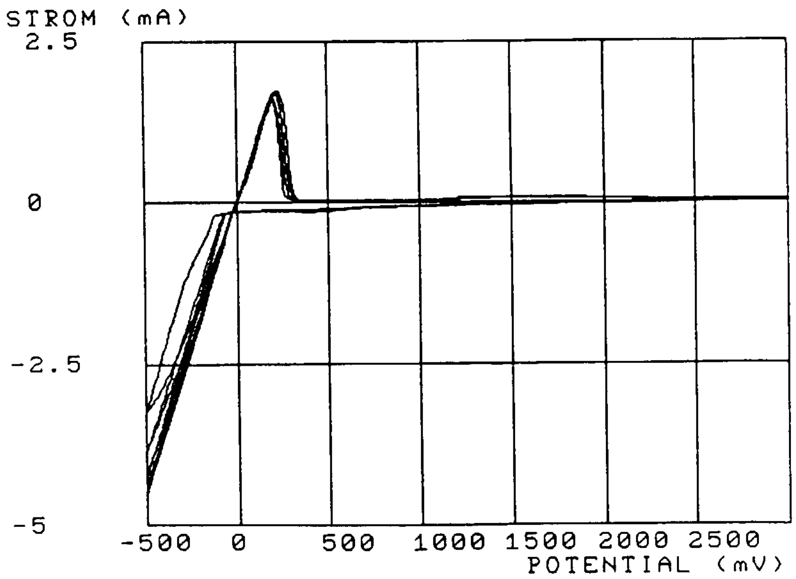


15.3%

**Fig.8:** 0,899 molal $LiB(C_6H_4O_2)_2$ in DME

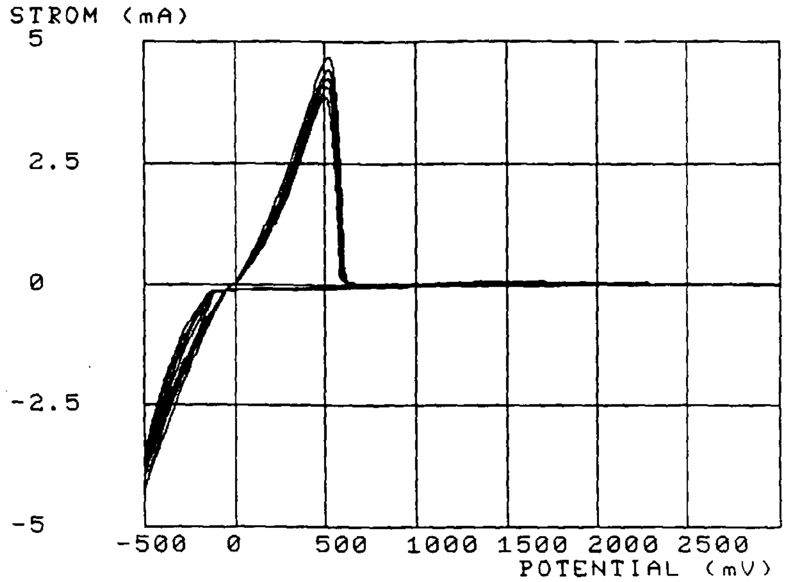


84.9%

**Fig.9:** 0,473 molal $LiB(C_6H_4O_2)_2$, 0,896 molal $N(CH_3)_4B(C_6H_4O_2)_2$ in einer Mischung aus 56,9 Gew% PC und 43,1 Gew% DME

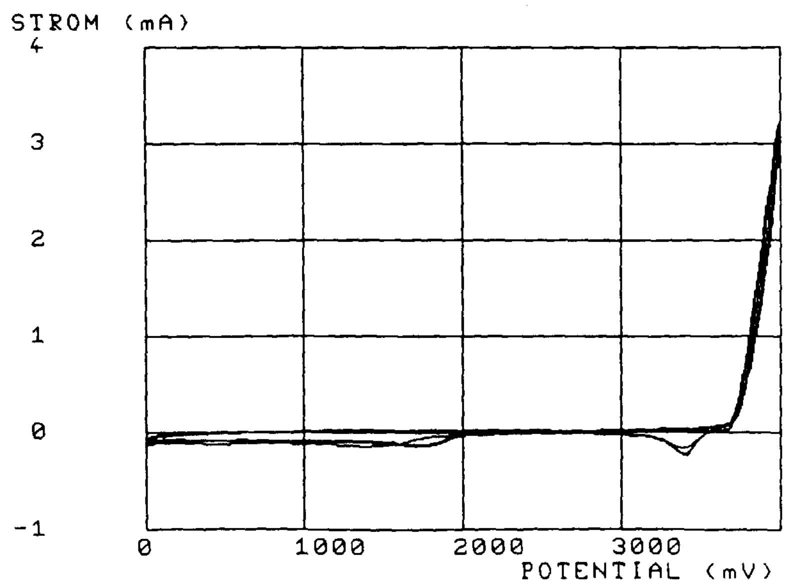


**Fig.10:** 0,473 molal $LiB(C_6H_4O_2)_2$ 0,896 molal $N(CH_3)_4B(C_6H_4O_2)_2$ in einer Mischung aus 56,9 Gew% PC und 43,1 Gew% DME

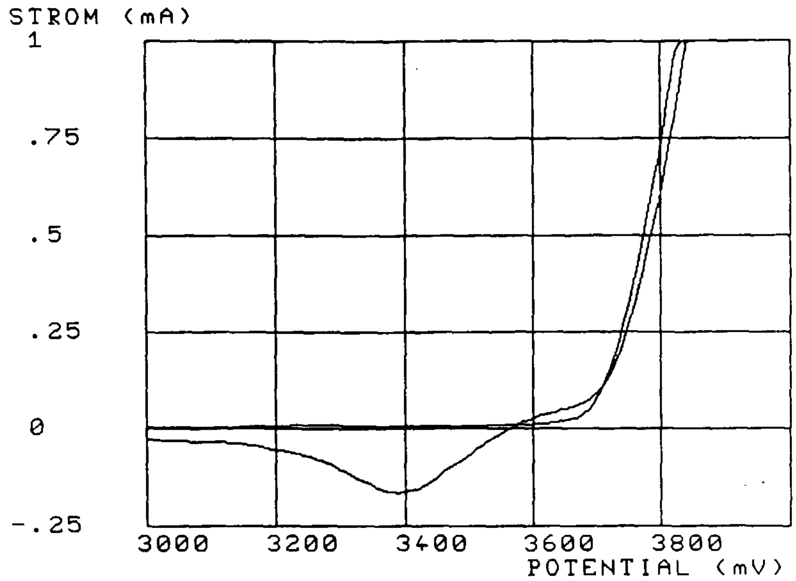


**Fig.11:** 0,473 molal $LiB(C_6H_4O_2)_2$ 0,896 molal $N(CH_3)_4B(C_6H_4O_2)_2$ in einer Mischung aus 56,9 Gew% PC und 43,1 Gew% DME

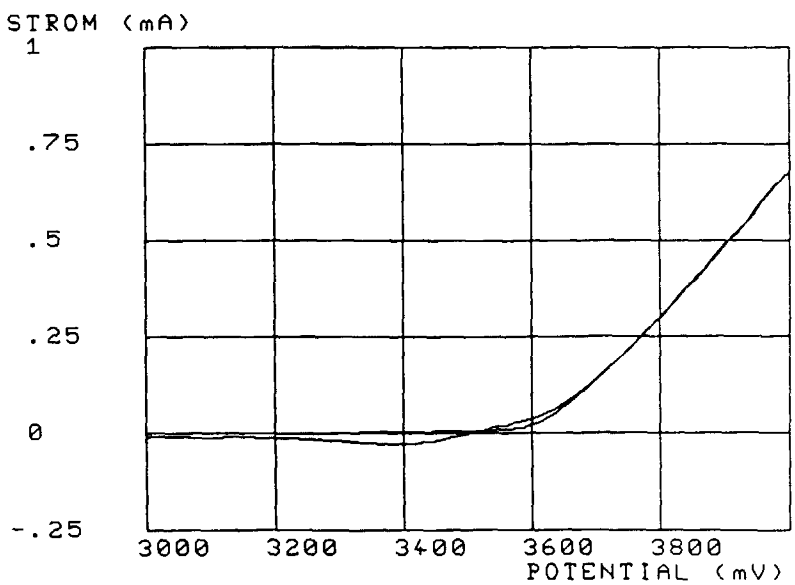


**Fig.12:** 1,231 molal $LiB(C_6H_4O_2)_2$ in PC

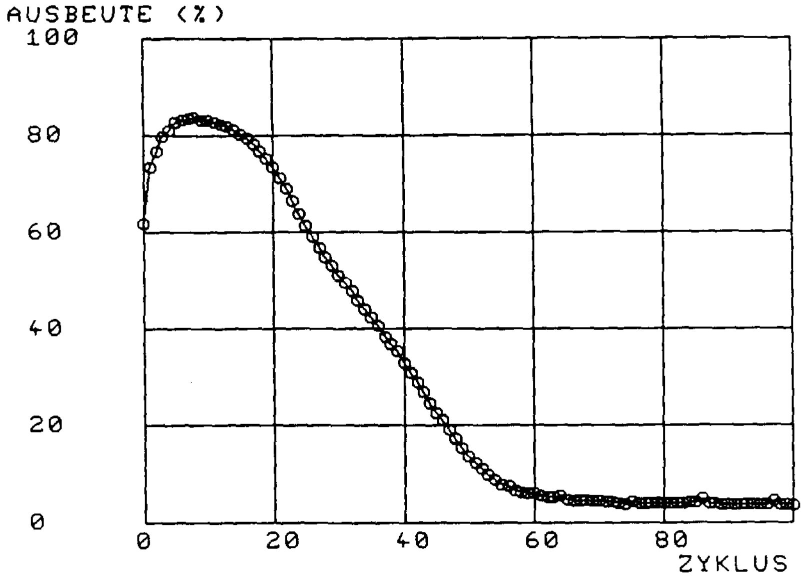


**Fig.13:** 1,231 molal $LiB(C_6H_4O_2)_2$ in PC

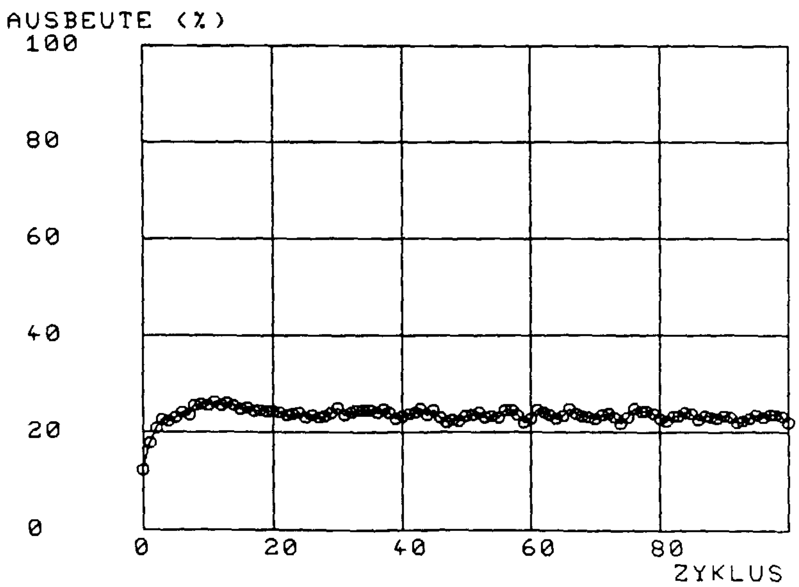


**Fig.14:** 0.899 molal $LiB(C_6H_4O_2)_2$ in DME

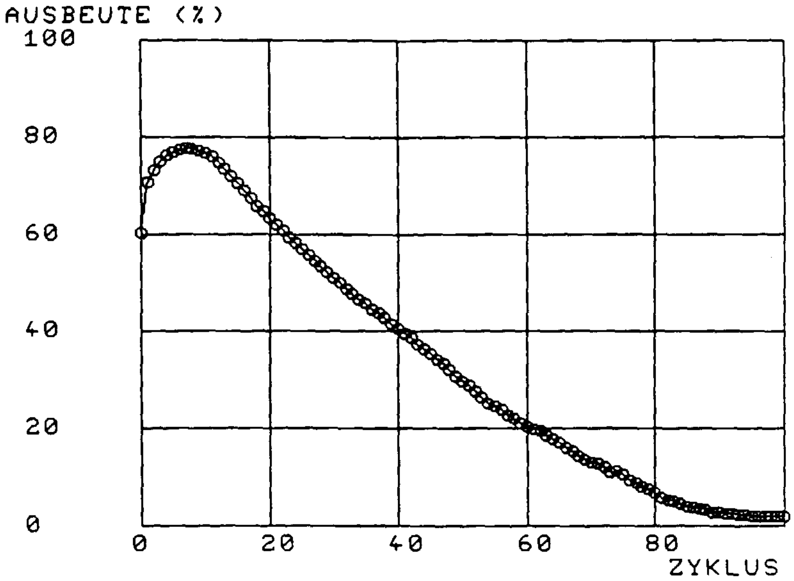


**Fig.15:** 0,473 molal $LiB(C_6H_4O_2)_2$ 0,896 molal $N(CH_3)_4B(C_6H_4O_2)_2$ in einer Mischung aus 56,9 Gew% PC und 43,1 Gew% DME

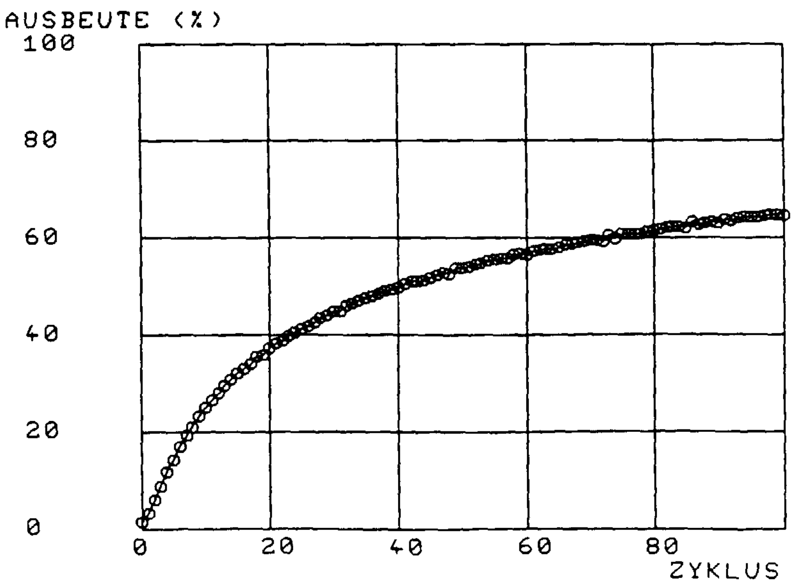


**Fig.16:** Zyklisierung auf Kohlenstoff

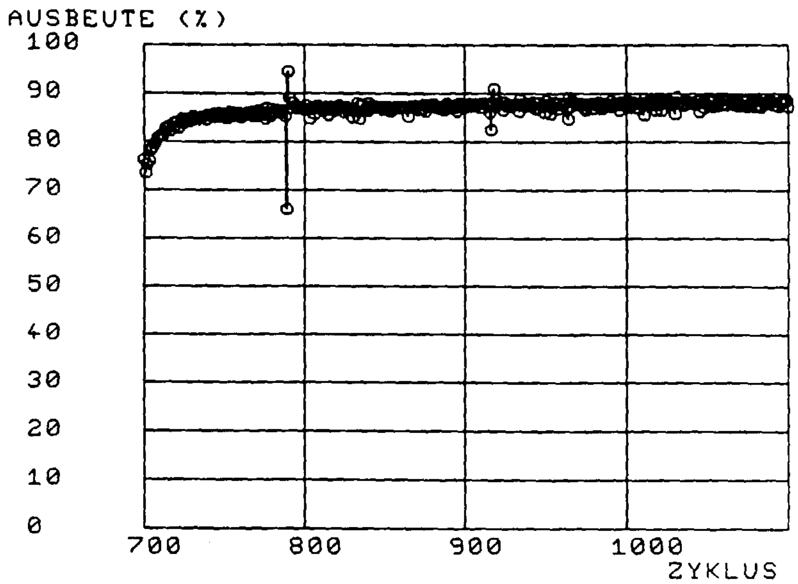


**Fig.17:** Zyklisierung auf Kohlenstoff